# EUROPEAN PATENT APPLICATION

(11) **EP 1 107 621 A2**
(43) Date of publication of application: **13.06.2001**
(21) Application number: 00308134.6
(22) Date of filing: 18.09.2000
(51) Int. Cl.: H04Q 7/30

(54) **Improved mobile to mobile calls**

(30) Priority: 10.12.1999 EP 99309989
(71) Applicant: LUCENT TECHNOLOGIES INC., Murray Hill, New Jersey 07974-0636 (US)
(72) Inventor: Costa, M., Chippenham, Wiltshire SN5 6PP (GB); Roberts, M., Prittlewell, Essex SS2 5EB (GB); Sivagnanasundaram, S., Tooting, London SW17 4EJ (GB); Jarvis, A.W., Tetbury, Gloucestershire GL8 8HB (GB)
(74) Representative: Buckley, Christopher Simon Thirsk

(57) **Abstract**

In a call between mobiles 18, 19 located in the same UTRAN 24, and in which at least one mobile has an IMSI, a method of providing local switching in which the RNC 22 sends on an uplink from the first mobile 18 to the CN 10 information related to the first mobile, such as its IMSI, and stores at least a part of that information; when the RNC 22 receives the same information on a downlink from the CN 10 to the second mobile 19, it recognises that the mobiles are within the same UTRAN 14 and performs local switching. Delay is reduced and the call can be charged at local rates. Instead of the IMSI, data frames from the first mobile 18 can be stored by the RNC 22 for comparison.

## Description

This invention relates to improvements in arrangements for mobile to mobile calls in a mobile radio telecommunications system such as Universal Mobile Telephone System (UMTS) or Global System for Mobile communications (GSM).

With the rapid increase in the use of mobile systems, it is now often the case that mobile to mobile calls originate within the same locality, such as within the same UTRAN (UMTS Terrestrial Radio Access Network), or even within the same building. This can be the case even when one or both of the mobiles has an International Mobile Subscriber Identifier (IMSI). In UMTS, the transcoder/Inter- Working Function is placed in the core network, in which case routing in current arrangements will always involve the home network. This involves connection of signaling and data over considerable distances, which can introduce difficulties and delays; this is especially so when transmission links include satellite hops, or when the transmission network passes through an Internet Protocol network where it will be difficult to guarantee the delay.

An obvious solution is to allow for local switching in the UTRAN under the control of the core network, which would allow the transmission and transcoding resources to be made available for other applications. However, in some circumstances local switching may not be appropriate, for example when a conference call is involved, so an arrangement must be provided which allows for local switching, but only when the circumstances of the connection are appropriate. It is an object of the invention to provide such an arrangement.

According to the invention, in a mobile radio telecommunications system, a method of providing switching between two mobile users located within the same radio access network characterized by supplying to a radio network controller, information related to the connection between the mobiles, whereby the controller identifies that both mobiles are within the radio access network controlled by the controller and initiates local switching.

Preferably the radio network controller transmits from the first mobile on an uplink to the core network, information related to the first mobile user and stores at least a part of that information; the radio network controller receives information on a downlink from the core network to the other mobile user; and compares it with the stored information; and on finding a match, initiates local switching.

Also according to the invention a component for the radio access network of a mobile radio telecommunications system characterised by being arranged to receive information related to a connection between first and second mobile systems in the system; to identify whether the first and second mobile systems are within the same radio access network; and, if so, to initiate local switching.

Further according to the invention a Mobile Switching Centre in a Core Network of a mobile radio telecommunications system characterised by being arranged to send to the originating and terminating legs of a connection between two mobile systems the International Mobile Switching Identifier of the mobile system in the other leg; and to inform the core network when local switching by at least one radio access network component is possible.

The invention will now be described by way of example only with reference to the accompanying drawings in which :-
Figure 1 illustrates schematically a part of a packet switched mobile radio telecommunications network (the UMTS);
Figure 2 illustrates how the UTRAN detects that, in a mobile to mobile call, both mobiles are within the UTRAN;
Figure 3 illustrates how the UTRAN switches the user plane paths; and
Figure 4 illustrates switching with two RNCs

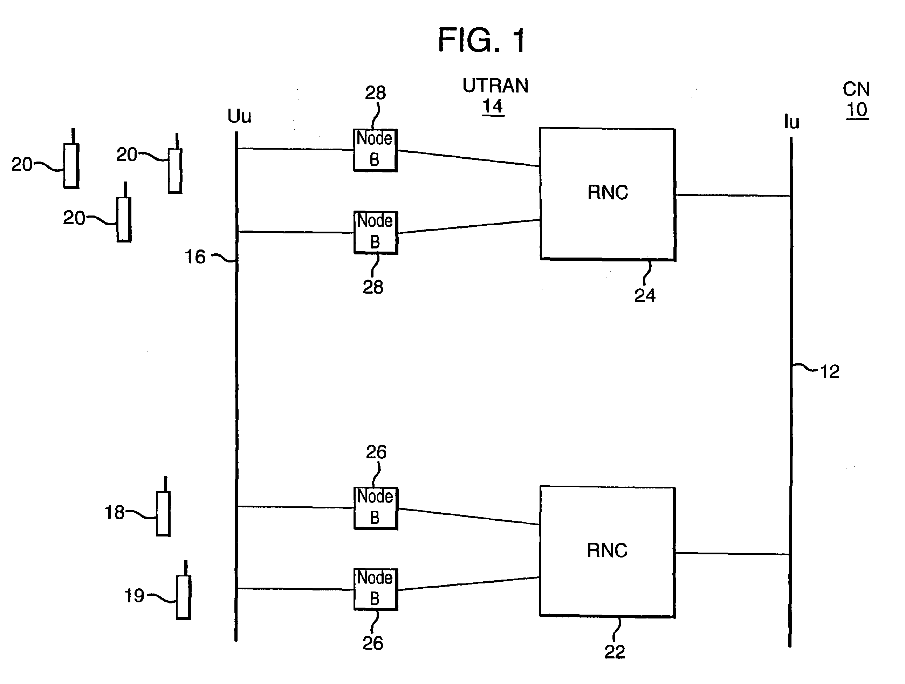

In Figure 1, a Core Network (CN) 10 has an interface 12, the Iu interface, to the UMTS Terrestrial Radio Access Network (UTRAN) 14, and the UTRAN 14 has an interface 16, the Uu interface, to a number of Mobile Systems (MSs) 18, 20.

Within the UTRAN 14 are a number of Radio Network Controllers (RNC) 22, 24, two only being illustrated, each RNC controlling a number of Node Bs 26, 28, two only being shown for each RNC. RNC 22 controls the MSs 18 and RNC 24 controls the MSs 20.

In the Figure, the network is the UMTS network; in a GSM network the equivalent building block to an RNC is termed a Base Station Controller (BSC); a Node B is termed a Base Transceiver Station (BTS); and the Uu interface is termed the radio interface.

The RNCs 22, 24 build frames containing data, send the frames to a Node B 26, 28 and control a mobile system as it moves over the ground. A Node B receives frames from an RNC, and modulates the data for passage to the radio interface Uu 16 and thence to a mobile.

The UMTS is arranged to have a control plane and a user plane; the control plane is arranged to control signalling between Node Bs and RNCs, to control the allocation of requests for resources, and to control handover requests. The user plane is responsible for handling the actual data.

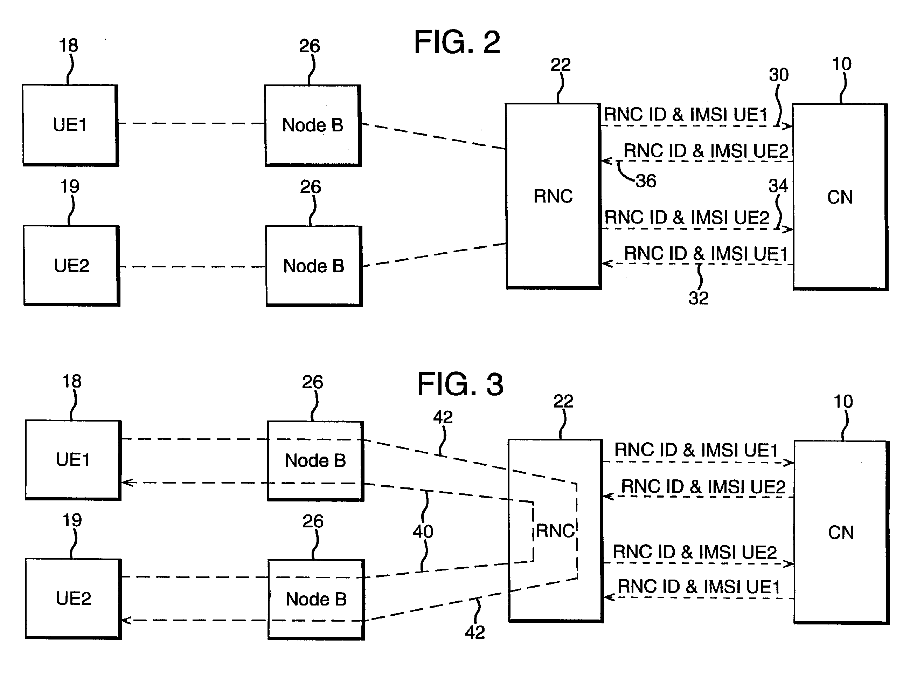

Suppose now that both of the mobiles 18, 19 have an International Mobile Switching Identifier (IMSI) which will be referred to as UE 1 and UE 2 respectively, and that mobile 18 initiates a call to mobile 19. In the arrangement according to the invention as shown in Fig. 2, the RNC 22 provides on the uplink to the CN 10 when setting up the call from the mobile 18 its own identifier RNC ID, and the mobile identifier IMSI UE 1, as indicated at reference 30. The RNC 22 also stores this information. The CN 10 sends this information on the downlink, reference 32, and it is received by the same RNC 22. Similarly, data related to mobile 19, i.e. the identity of RNC 10, RNC ID, and the identifier of the mobile 19, IMSI UE 2, are also sent by the RNC 22 to the CN 10, reference 34, and are received from the CN, reference 36.

The RNC 22 can now compare the information about the call which it receives from the CN 10 on the downlink with the information about that call which it stored as a record of what it sent on the uplink. For both mobiles 18, 19, the stored and downlink information is identical. The RNC 22 now knows that both mobiles 18, 19 are within its UTRAN 14. The RNC 22 has then the information to perform local switching. This is operated via short-circuiting, at the RNC 22, the communicatiorrpath between RNC 22 and the mobile users UE1 and UE2, as indicated by the broken line connections 40, 42 in Figure 3. The connections 40, 42 pass through the RNC 22, but the CN 10 and network resources beyond the CN 10 are no longer involved; the user plane connection has been removed from the core network..

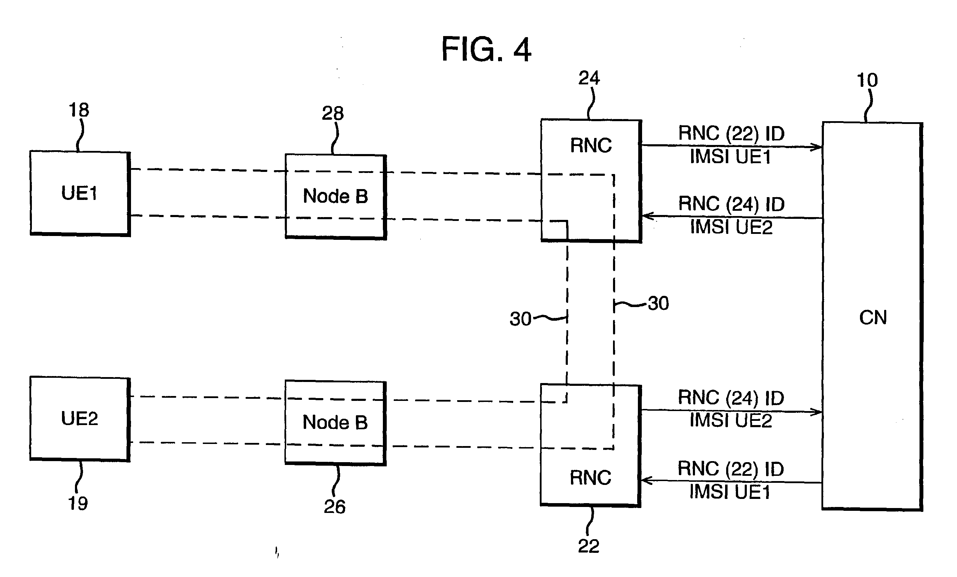

More generally, the short circuit of the communication paths is done locally at the RNC 22 when the user mobiles 18 and 19 are both served by the same RNC 22. Otherwise, when for example the user mobile 18 is served by RNC22 and mobile 19 is served by RNC 24, the shortcircuiting is carried out within the radio access network 14. If the radio access network provides local physical connectivity between RNC 22 and RNC24, this local physical connectivity can be used to perform user plane traffic switching between RNC22 and RNC 24, as indicated by the broken line connections 30 in Figure 4.

Otherwise, physical connectivity provided by CN 10 can be used.

Preferably a transparent field or embedded channel is set up which is transported in band, from the RNC 22 to any other RNCs involved in the connection. This transparent field is transported within in band user plane frames. The CN 10 is required to forward on the information.

With the direct connection according to the invention, delays are reduced and quality of service is improved. An advantage for the user is that the call can now be charged at a local rate even when one or both callers have an international home radio network controller.

Instead of sending the user equipment IMSI and its own ID, the RNC 22 can in a variation send out other information associated with the connection and bearer, for example the Mobile Network Coder or the Radio Access Bearer identity.

In another variation, instead of sending out identity information, the RNC 22 can store a small number of the data frames which it sends out, and compare them with received frames; a perfect match indicates a local call within the UTRAN 14.

The invention has been described with reference to the RNC 22 making the decision to perform local switching; in some circumstances, it may be appropriate to ask the CN 10 for permission to do so before setting up the local link.

The invention has been described with reference to only one radio network controller within the UTRAN 14; it is also possible to involve two or more RNCs in setting up local switching, provided they are within the same UTRAN.

Whatever the arrangements, in each case the UTRAN 14 or an element within it such as RNC 22 receives back the same information that it sent out, and therefore knows that local switching is permissible. In the case of a conference call arrangement or the like, the same information will not be received as was sent out, so local switching is contra-indicated.

In a major variation, not illustrated, a Mobile Switching Centre (MSC) in the CN 10 is arranged to send to each of the originating and terminating legs of the connection the IMSI of the other leg; the RNC 22 can then perform local switching as described above. However, it is not always possible for the core network to identify a link between the outgoing and incoming legs, in which case the IMSI information cannot be supplied. Further, in such an arrangement, it is essential to inform the CN before local switching is performed, because the CN may have inserted some inbound processing, such as voice announcements or bridges; the UTIM will be unaware of this, but local switching will then not be permissible, therefore the CN 10 must be involved in the decision.

## Claims

1. In a mobile radio telecommunications system, a method of providing switching between first and second mobile users (18, 19) within the same radio access network (14) characterised by supplying to the radio access network (14) information related to the connection between the first and second mobiles (18, 19), whereby the radio access network (14) identifies that the first and second mobiles (18, 19) are within the radio access network (14), and initiates local switching.

2. A method according to claim 1 in which the local switching is initiated by a radio network controller (22) in the radio access network (14), the controller serving both of the mobiles (18,19).

3. A method according to Claim 2 in which the radio network controller (22) transmits on an uplink from the first mobile (18) to the core network (10) information related to said first mobile user (18) and stores at least a part of that information; the radio network controller (22) receives information on a downlink to the second mobile user (19) from the core network (10) and compares it with the stored information; and on finding a match, the radio network controller initiates local switching.

4. A method according to Claim 3 in which the radio network controller (22) transmits and stores data relating to its own identity and the identity of the first mobile (18).

5. A method according to Claim 3 in which the radio network controller (22) transmits and stores information related to the Radio Access Bearer or the Mobile Network Coder.

6. A method according to Claim 3 in which the radio network controller (22) transmits data frames from the first mobile (18) and stores some of said frames.

7. A method according to Claim 1 in which a core network (10) of the system is arranged to supply to the radio access network (14) the identity of an originating connection leg for transmission to a terminating connection leg, and the identity of the terminating connection leg for transmission to the originating connection leg.

8. A method according to any preceding claim in which one mobile user is associated with a first radio network controller and the second mobile user is associated with a second radio network controller, both controllers being within the same radio access network (14), and in which local physical connectivity between the two controllers is used to perform user plane traffic switching.

9. A method according to any preceding claim in which the information related to the end-to-end connection between the first and second mobiles (18, 19) is transported within in-band user plane frames.

10. A method according to Claim 9 in which before performing local switching, the radio network controller (22) requests from the core network (10) permission to perform said switching.

11. A component (22) for the radio access network of a mobile radio telecommunications system characterised by being arranged to receive information related to a connection between first and second mobile systems (18, 19) in the system; to identify whether the first and second mobile systems are within the same radio access network; and, if so, to initiate local switching.

12. A component according to Claim 11 which is a radio network controller (22).

13. A radio network controller (22) according to Claim 11 arranged to transmit on an uplink from the first mobile system (18) to a core network (10) of the telecommunications system information related to said first mobile system (18) and to store at least a part of that information; to receive information on a downlink to the second mobile system (19) from the core network (10); to compare the received information with the stored information; and on finding a match, to initiate local switching between the first and second mobile systems.

14. A radio network controller (22) according to Claim 13 arranged so that when the first and second mobile systems (18, 19) are served by the controller (22), the controller provides a short circuit for the switching path.

15. A radio network controller (22) according to Claim 13 arranged so that when the first mobile system (18) is served by the controller (22) and the second mobile system (19) is served by a second radio network controller (24), the controller (22) is arranged to co-operate with the second controller (24) to provide a short circuit for the switching path.

16. A radio network controller (22, 24) according to Claim 15 arranged so that information related to the connection between the first and second mobile systems (18, 19) is transported within in-band user plane frames.

17. A mobile switching centre in a Core Network (10) of a mobile radio telecommunications system characterised by being arranged to send to the originating and terminating legs of a connection between two mobile systems (18, 19) the International Mobile Switching Identifier of the mobile system in the other leg; and to inform the core network (10) when local switching by at least one radio access network component is possible.
